# EUROPEAN PATENT APPLICATION

(11) **EP 1 743 910 A1**
(43) Date of publication of application: **17.01.2007**
(21) Application number: 05728465.5
(22) Date of filing: 06.04.2005
(51) Int. Cl.: C08F 220/22, C04B 41/48, C04B 41/63, C04B 41/83, C09D 127/12, C09D 133/16, C09K 3/18

(54) **POLYMER FOR MASONRY TREATMENT AND TREATING AGENT**

(30) Priority: 09.04.2004 JP 2004115457
(71) Applicant: DAIKIN INDUSTRIES, LTD., Osaka-shi, Osaka 530-8323 (JP)
(72) Inventor: UEDA, Akihiko, Yodogawa Works of, Settsu-shi, Osaka 5668585 (JP); FUKUDA, Teruyuki Yodogawa Works of, Settsu-shi, Osaka5668585 (JP); NAGASHIMA, Kogio Yodogawa Works of, Settsu-shi, Osaka 5668585 (JP); MAEDA, Masahiko Yodogawa Works of, Settsu-shi, Osaka 5668585 (JP)
(74) Representative: HOFFMANN EITLE
(86) International application number: PCT/JP2005/006768
(87) International publication number: WO 2005/097850

(57) **Abstract**

A treating agent containing a fluoropolymer for use in masonry treatment obtained from (A) a fluoromonomer, (B) a monomer having at least one acid group selected from the group consisting of carboxy, phosphate, phosphonate, phosphinate, sulfate, sulfo, and sulfino groups, and (C) a non-fluorinated monomer containing a hydrophobic group. The treating agent imparts to a masonry excellent water- and oil-repellency and excellent unsusceptibility to fouling.

## Description

### TECHINICAL FIELD

The present invention relates to a polymer, treatment agent and treatment method for treating a masonry, and a treated article.

### BACKGROUND ART

It is studied that water and oil repellency and soil resistance are imparted by treating a surface of a masonry such as stone with a compound having a fluoroalkyl group (Rf group).
For example, JP-A-57-23662 describes that an acrylate having a Rf group is coated on a concrete and a stone to form a protective film. JP-A-07-109317 discloses a treatment agent comprising a fluorine-containing copolymer comprising a monomer having a Rf group, and a silicone-based vinyl monomer.

JP-A-11-507687 discloses a masonry-treatment agent comprising a water-soluble polymer having a Rf group, a carboxyl group, an oxyalkylene group and a silyl group. EP1225187 discloses the treatment of ceramics with a polymer having a silyl group which comprises a Rf group-containing monomer, a fluorine-free monomer and a silyl group-containing monomer. Further, JP-A-11-077677 proposes that a stone is treated with a phosphate ester having a Rf group.

These treatment agents, however, do not have both of sufficient water repellency and sufficient oil repellency, are weak to aqueous soil in the case of an aqueous treatment agent, and cannot impart sufficient soil resistance for a masonry-treatment agent.
JP-A-2001-504874 describes that an amphipathic polymer comprising a fluorinated monomer is used for leather, but the treatment of masonry is not considered.
Described below are the environmental problems raised by perfluorooctanoic acid (PFOA). The results of the latest researches [a report of the Environmental Protection Agency (EPA), "PRELIMINARY RISK ASSESSMENT OF THE DEVELOPMENTAL TOXICITY ASSOCIATED WITH EXPOSURE TO PERFLUOROOCTANOIC ACID AND ITS SALTS" (http://www.epa.gov/opptintr/pfoa/pfoara.pdf)] have taught that PFOA (perfluorooctanoic acid), one of long chain fluoroalkyl compounds, is proved to have a danger to burden the environment. Under such a situation, EPA announced on April 14, 2003 that the scientific investigation on PFOA should be more intensively executed.
On the other hand, the Federal Register (FR Vol.68, No.73/April 16, 2003 [FRL-7303-8], http://www.epa.gov/opptintr/pfoa/pfoafr.pdf), EPA Environmental News FOR RELEASE: MONDAY APRIL 14, 2003 EPA INTENSIFIES SCIENTIFIC INVESTIGATION OF A CHEMICAL PROCESSING AID (http://www.epa.gov/opptintr/pfoa/pfoaprs.pdf) and EPA OPPT FACT SHEET April 14, 2003 (http://www.epa.gov/opptintr/pfoa/pfoafacts.pdf) have published that telomers have a possibility to produce PFOA when decomposed or metabolized (herein, the telomer means a long chain fluoroalkyl group), and also that telomers have been widely used in foam fire extinguishers, care products, washing materials, carpets, textiles, paper, leather, etc., in order to impart water and oil repellency and soil resistance to them.
Patent Document 1: JP-A-57-23662
Patent Document 2: JP-A-07-109317
Patent Document 3: JP-A-11-507687
Patent Document 4: EP1225187
Patent Document 5: JP-A-11-077677
Patent Document 6: JP-A-2001-504874

### DISCLOSURE OF THE INVENTION

### Problems to be Solved by the Invention

An object of the present invention is to provide a treatment agent which imparts both of excellent water- and oil-repellency and excellent soil resistance to masonry.

### Means for Solving the Problems

The present invention provides a fluorine-containing polymer for a masonry treatment, comprising:
(A) a fluorine-containing monomer,
(B) a monomer containing at least one acid group selected from the group consisting of a carboxylic acid group, a phosphoric acid group, a phosphonic acid group, a phosphinic acid group, a sulfuric acid group, a sulfonic acid group and a sulfinic acid group, and
(C) a fluorine-free monomer containing a hydrophobic group.
In one of embodiments, the present invention provides a fluorine-containing polymer comprising:
(A) a fluorine-containing monomer having a fluorine-containing group, of the formula: 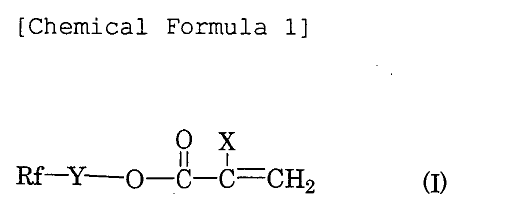 wherein X is a fluorine atom, a chlorine atom, a bromine atom, an iodine atom, a CFX¹X² group (in which X¹ and X² are each a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group;
   Y is a direct bond, an aliphatic group having 1 to 10 carbon atoms which optionally has an oxygen atom, an aromatic, cycloaliphatic or araliphatic group having 6 to 10 carbon atoms which optionally has an oxygen atom, a -CH₂CH₂N(R¹)SO₂- group (in which R¹ is an alkyl group having 1 to 4 carbon atoms) or a -CH₂CH(OY¹)CH₂- group (in which Y¹ is a hydrogen atom or an acetyl group); and
   Rf is a linear or branched fluoroalkyl or fluoroalkenyl group having 1 to 21 carbon atoms, or a fluoroether group having totally 1 to 200 repeating units selected from the group consisting of the repeating units: -C₃F₆O-, -C₂F₄O- and -CF₂O-,
(B) a monomer containing at least one acid group selected from the group consisting of a carboxylic acid group, a phosphoric acid group, a phosphonic acid group, a phosphinic acid group, a sulfuric acid group, a sulfonic acid group and a sulfinic acid group, and
(C) a fluorine-free monomer containing a hydrophobic group.
In another of embodiments, the present invention provides a fluorine-containing polymer comprising:
(A) 35 to 90 % by weight of a fluorine-containing monomer having a fluorine-containing group, of the formula: 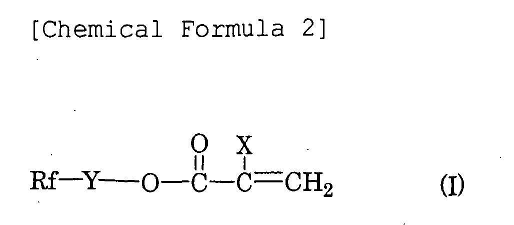 wherein X is a hydrogen atom or a methyl group;
   Y is a direct bond, an aliphatic group having 1 to 10 carbon atoms which optionally has an oxygen atom, an aromatic, cycloaliphatic or araliphatic group having 6 to 10 carbon atoms which optionally has an oxygen atom, a -CH₂CH₂N(R¹)SO₂- group (in which R¹ is an alkyl group having 1 to 4 carbon atoms) or a -CH₂CH(OY¹)CH₂- group (in which Y¹ is a hydrogen atom or an acetyl group); and
   Rf is a linear or branched fluoroalkyl or fluoroalkenyl group having 1 to 21 carbon atoms, or a fluoroether group having totally 1 to 200 repeating units selected from the group consisting of the repeating units: -C₃F₆O-, -C₂F₄O- and -CF₂O-,
(B) 5 to 50 % by weight of a monomer containing at least one acid group selected from the group consisting of a carboxylic acid group, a phosphoric acid group, a phosphonic acid group, a phosphinic acid group, a sulfuric acid group, a sulfonic acid group and a sulfinic acid group, and
(C) 2 to 18 % by weight of a fluorine-free monomer containing a hydrophobic group,
   the % by weight is based on 100% by weight of the fluorine-containing polymer.

### EFFECTS OF THE INVENTION

The present invention can give masonry excellent in water- and oil-repellency and an antifouling property.

### BEST MODE OF CARRYING OUT THE INVENTION

The fluorine-containing polymer of the present invention comprises repeating units derived from each of the monomers (A), (B) and (C).
In the fluorine-containing polymer, examples of the fluorine-containing monomer (A) include a monomer having:
at least one fluorine-containing group selected from the group consisting of a fluoroalkyl group, a fluoroalkenyl group and a fluoroether group (hereinafter referred to as "fluorine-containing group"), and
an unsaturated group of the formula:

-O-CO-CX=CH₂

wherein X is a hydrogen atom, a methyl group, a fluorine atom, a chlorine atom, a bromine atom, an iodine atom, a CFX¹X² group (in which X¹ and X² are each a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group. X is preferably a fluorine atom, a chlorine atom, a bromine atom, an iodine atom, a CFX¹X² group (in which X¹ and X² are each a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group, because higher water- and oil-repellency can be obtained.

The fluorine-containing monomer includes, for example, an acrylate monomer, maleate monomer, fumarate monomer, and urethane monomer having the fluorine-containing group.

The acrylate monomer having the fluorine-containing group is, for example, represented by the formula: 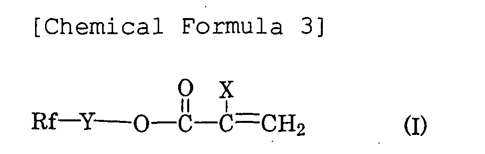 wherein X is a hydrogen atom, a methyl group, a fluorine atom, a chlorine atom, a bromine atom, an iodine atom, a CFX¹X² group (in which X¹ and X² are each a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group,
Y is a direct bond, an aliphatic group having 1 to 10 carbon atoms which optionally has an oxygen atom, an aromatic, cycloaliphatic or araliphatic group having 6 to 10 carbon atoms which optionally has an oxygen atom, a -CH₂CH₂N (R¹) SO₂- group (in which R¹ is an alkyl group having 1 to 4 carbon atoms) or a -CH₂CH(OY¹)CH₂- group (in which Y¹ is a hydrogen atom or an acetyl group); and
Rf is a linear or branched fluoroalkyl or fluoroalkenyl group having 1 to 21 carbon atoms, or a fluoroether group having totally 1 to 200 repeating units selected from the group consisting of the repeating units: -C₃F₆O-, -C₂F₄O- and -CF₂O-.

When the Rf group in the formula (I) is a fluoroalkyl group, the Rf group is preferably a perfluoroalkyl group. The Rf group has 1 to 21 carbon atoms, particularly 1 to 15 carbon atoms, especially 2 to 15 carbon atoms, for example, 2 to 12 carbon atoms. The upper limit of the carbon atom number in the Rf group may be 6 or 4. Examples of the Rf group include -CF₃, -CF₂CF₃, -CF₂CF₂CF₃, -CF(CF₃)₂, -CF₂CF₂CF₂CF₃, -CF₂CF(CF₃)₂, -C(CF₃)₃, (CF₂)₄CF₃, -(CF₂)₂CF(CF₃)₂, -CF₂C(CF₃)₃, -CF(CF₃)CF₂CF₂CF₃, -(CF₂)₅CF₃, (CF₂)₃CF(CF₃)₂, -(CF₂)₄CF(CF₃)₂, - (CF₂)₇CF₃, -(CF₂)₅CF(CF₃)₂, -(CF₂)₆CF (CF₃)₂, -(CF₂)₉CF₃, -(CF₂)₂H, -CF₂CFHCF₃, -(CF₂)₄H, -(CF₂)₆H, -(CF₂)₈H, and -(CF₂)₁₀H.
When the Rf group is the fluoroalkenyl group, examples of the Rf group include -C(CF(CF₃)₂)=C(CF₃)(CF₂CF₂CF₃), -C(CF(CF₃)₂) =C(CF₃)(CF(CF₃)₂) and -C(CF₃)=C(CF(CF₃)₂)₂.
When the Rf group is the fluoroether group, examples of the Rf group include F(CF₂CF₂CF₂O)ₐCF₂CF₂- and F(CF(CF₃)CF₂O)ₐCF(CF₃)- wherein "a", on average, is from 2 to 100, particularly 5 to 50, for example, 25.

Y is a direct bond, an aliphatic group having 1 to 10 carbon atoms which optionally has an oxygen atom, an aromatic, cycloaliphatic or araliphatic group having 6 to 10 carbon atoms which optionally has an oxygen atom, a -CH₂CH₂N(R¹)SO₂- group (in which R¹ is an alkyl group having 1 to 4 carbon atoms) or a -CH₂CH(OY¹)CH₂- group (in which Y¹ is a hydrogen atom or an acetyl group). Preferably, the aliphatic group is an alkylene group (particularly having 1 to 4 carbon atoms, for example, 1 or 2 carbon atoms). The aromatic group and the cycloaliphatic group may be substituted or may not be substituted.

Examples of the above-mentioned fluorine-containing monomer include the followings:

Rf-(CH₂)₁₀OCOCH=CH₂

Rf-(CH₂)₁₀OCOC(CH₃)=CH₂

Rf-CH₂ OCOCH=CH₂

Rf-CH₂ OCOC (CH₃)=CH₂

Rf-(CH₂)₂OCOCH=CH₂

Rf-(CH₂)₂OCOC(CH₃)=CH₂

Rf-SO₂N(CH₃)(CH₂)₂OCOCH=CH₂

Rf-SO₂N(C₂H₅)(CH₂)₂OCOCH=CH₂

Rf-CH₂CH(OCOCH₃)CH₂OCOC(CH₃)=CH₂

Rf-CH₂ CH (OH) CH₂ OCOCH=CH₂

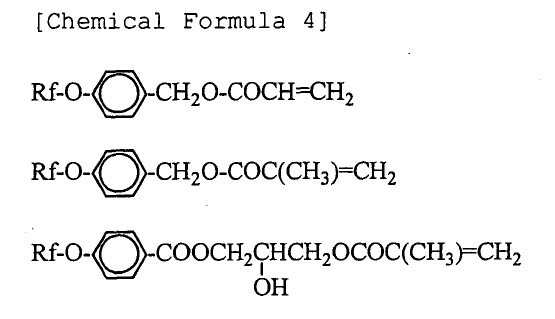

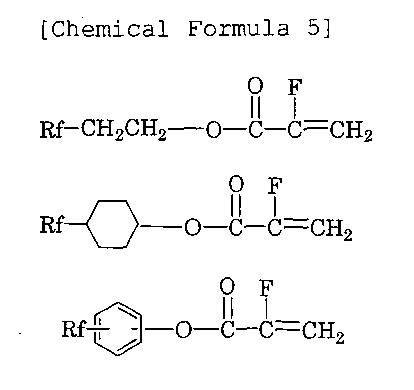

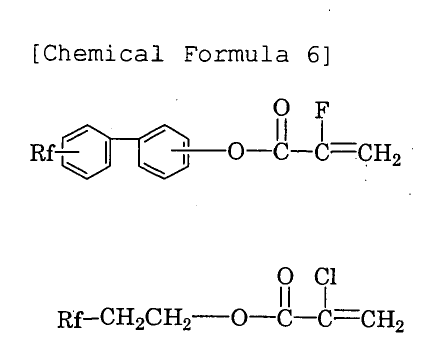

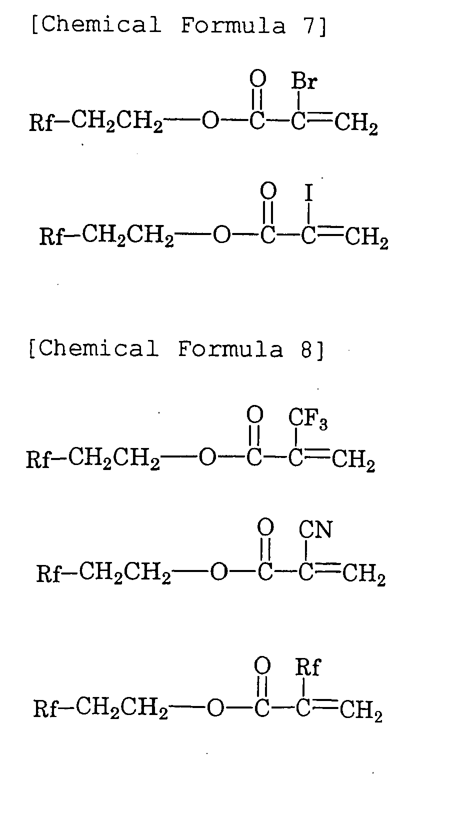

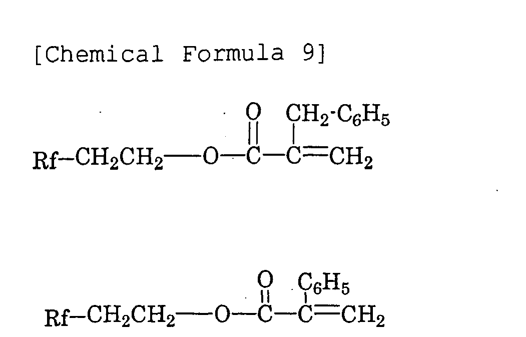

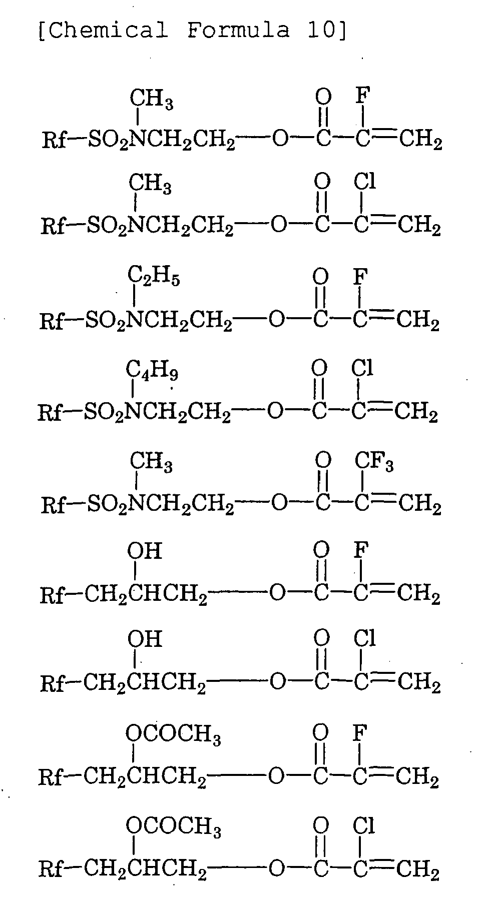

wherein Rf is a linear or branched fluoroalkyl or fluoroalkenyl group having 1 to 21 carbon atoms, or a fluoroether group having totally 1 to 200 repeating units selected from the group consisting of the repeating units: -C₃F₆O-, -C₂F₄O- and -CF₂O-.

The maleate or fumarate monomer having the fluorine-containing group, which derives the fluorine-containing polymer is, for example, represented by the formula:

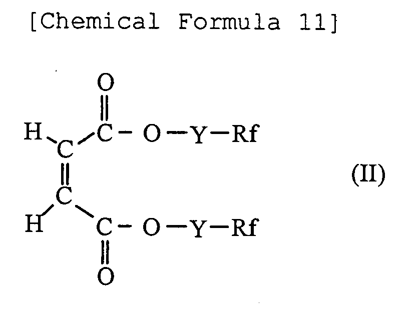

or, the formula: 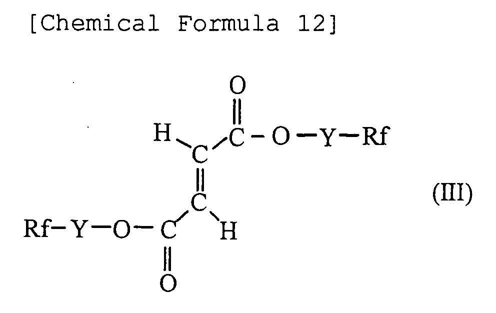 wherein Rf and Y are the same as in the formula (I).

The fluoroalkyl group-containing urethane monomer deriving the fluorine-containing polymer can be prepared by reacting:
(a) a compound having at least two isocyanate groups,
(b) a compound having one carbon-carbon double bond and at least one hydroxyl group or amino group, and
(c) a fluorine-containing compound one hydroxyl group or amino group.
   Examples of the compound (a) include the followings:

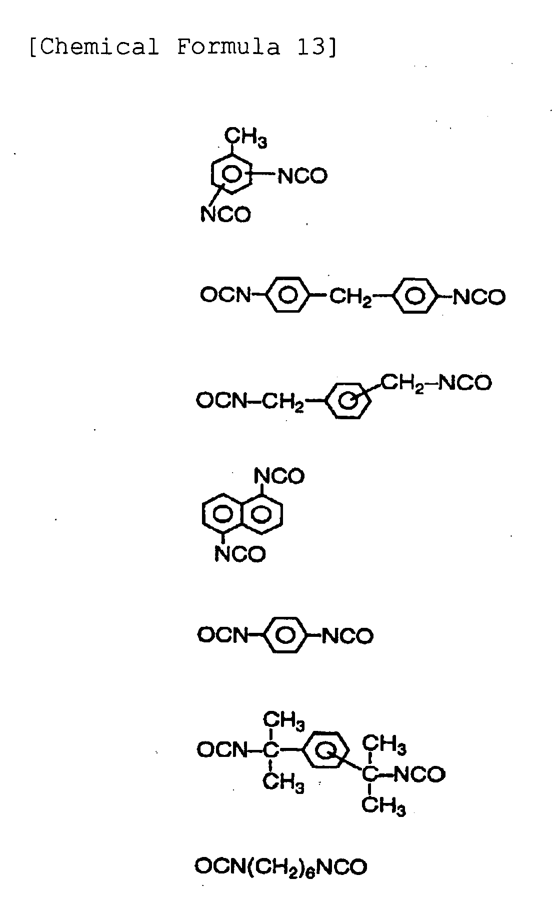

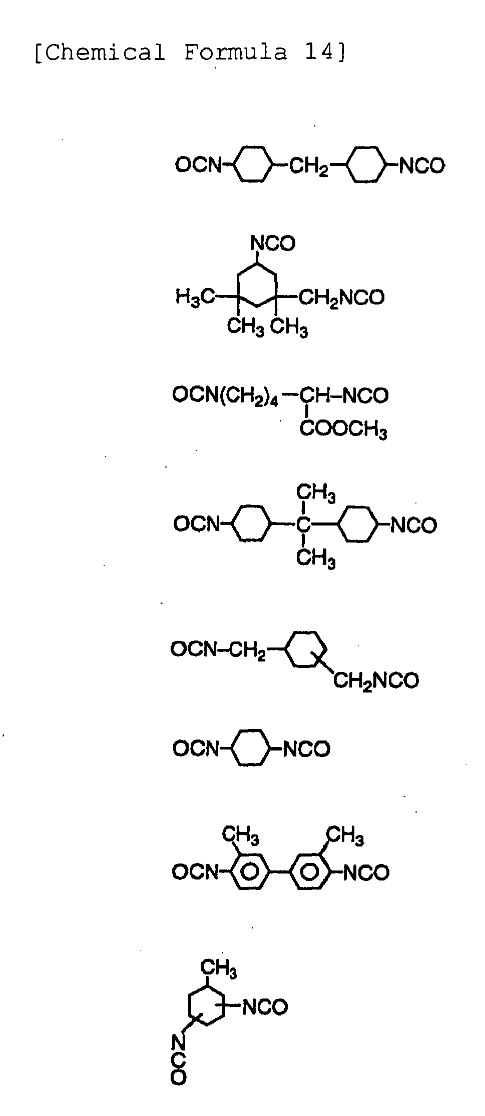

The compound (a) is preferably a diisocyanate. However, a triisocyanate and a polyisocyanate can be also used for the reaction.
For example, a trimer of diisocyanate, polymeric MDI (diphenylmethane diisocyanate) and an adduct of diisocyanate with a polyhydric alcohol such as trimethylol propane, trimethylol ethane and glycerol can be also used for the reaction.
Examples of the triisocyanate and the polyisocyanate are as follows:

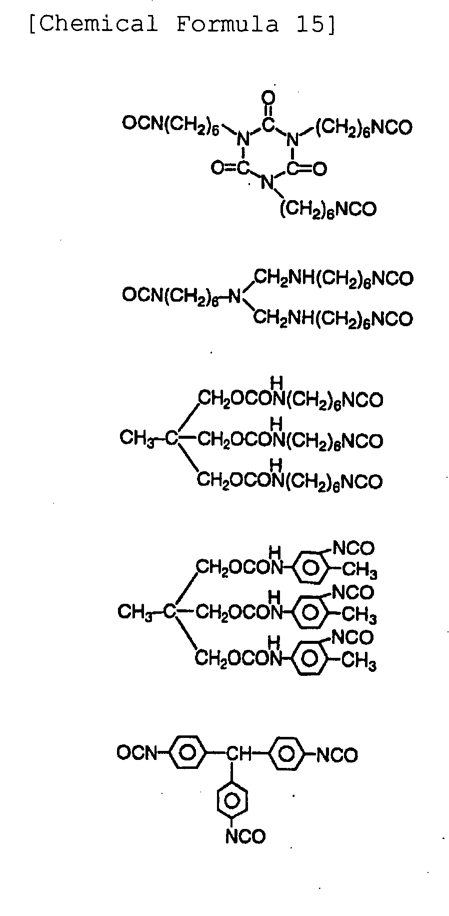

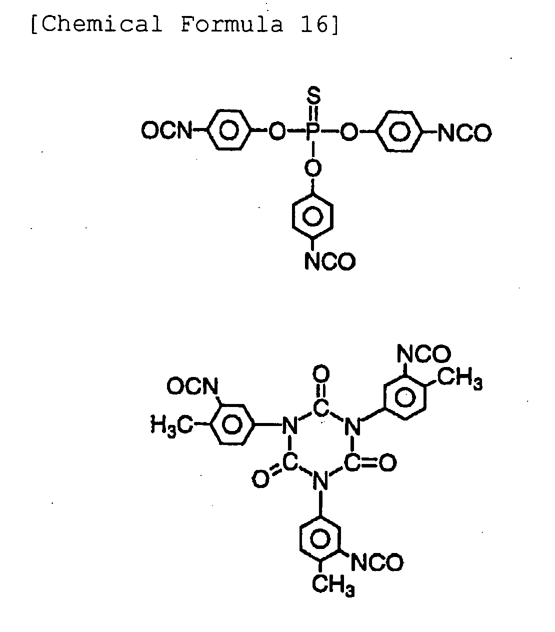

The compound (b) may be, for example, of the formula:

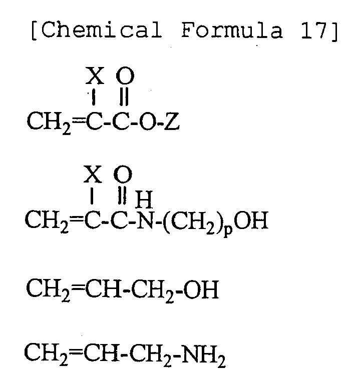

In the formulas, X is the same as in the formula (I). p is from 0 to 10 (for example, 1 to 5). Examples of Z include the followings:

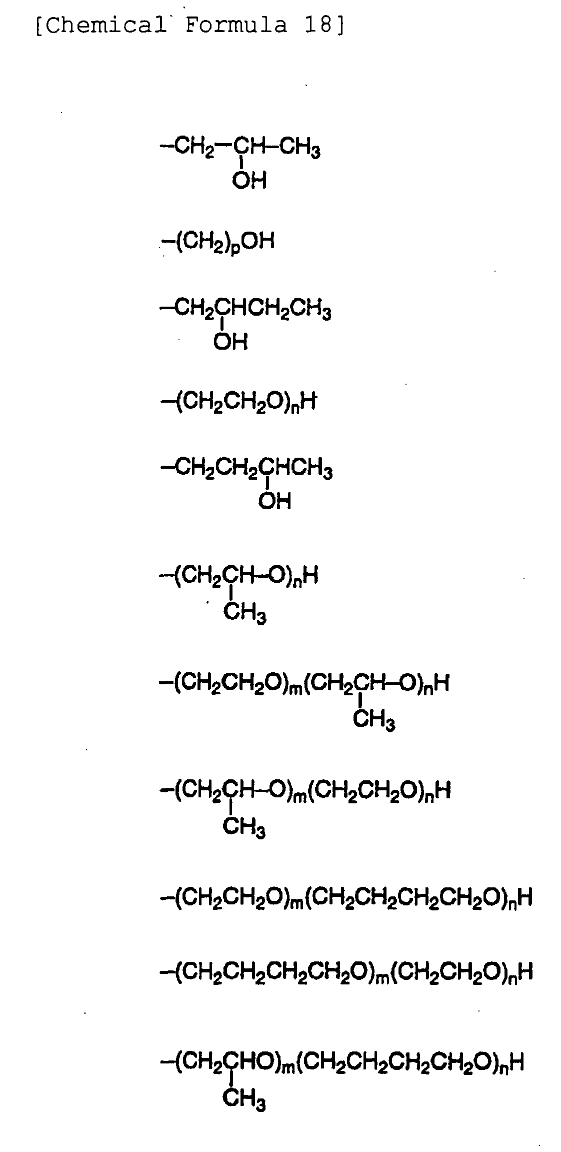

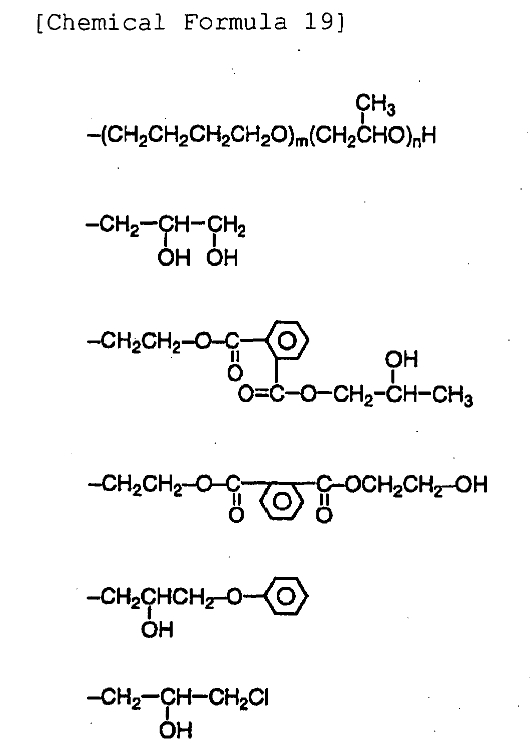

wherein m and n are the number of 1 to 300.

The compound (c) may be a compound of the formula:

Rf-Y-OH

or

Rf-Y-NH₂

wherein Rf and Y are the same as in the formula (I).

Examples of the compound (c) include the followings:

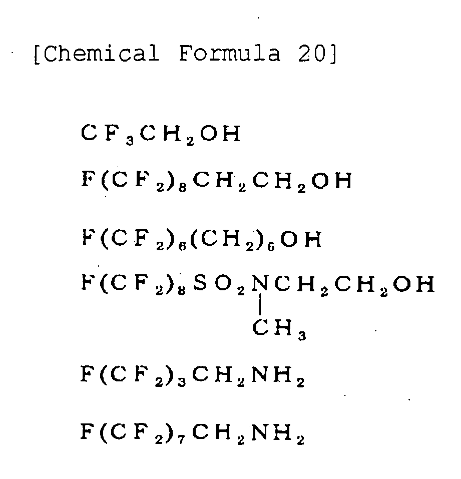

The compounds (a), (b) and (c) may be reacted such that when the compound (a) is a diisocyanate, both the compounds (b) and (c) are in amounts of 1 mol based on 1 mol of the compound (a); when the compound (a) is a triisocyanate, the compound (b) is in an amount of 1 mol and the compound (c) is in an amount of 2 mol based on 1 mol of the compound (a).

In the acid group-containing monomer (B), the acid group is selected from the group consisting of a carboxylic acid group (-C(=O)OH), a phosphoric acid group (-OP(=O)(OH)₂), a phosphonic acid group (-P(=O)(OH)₂), a phosphinic acid group (-P(=O)H(OH)), a sulfuric acid group (-O-S(=O)₂OH), a sulfonic acid group (-S(=O)₂OH) and a sulfinic acid group (-S(=O)OH).
The acid group can be a site capable of forming a salt.
The formation of the salt improves the solubility or dispersibility in water. In addition, the acid group contributes a bonding property when masonry contains a metal.

Specific examples of the carboxylic acid group-containing monomer include methacrylic acid, acrylic acid, 2-methacryloyloxyethyl succinate, 2-acryloyloxyethyl succinate, 2-methacryloyloxyethyl phthalate, 2-acryloyloxyethyl phthalate, 2-methacryloyloxyethyl hexahydrophthalate, 2-acryloyloxyethyl hexahydrophthalate, 2-acryloyloxypropyl phthalate, 2-acryloyloxypropyl hexahydrophthalate, 2-acryloyloxypropyl tetrahydrophthalate, itaconic acid, carboxyethyl acrylate, methacryloxyethyl trimellitate, crotonic acid, N-acryloyl alanine, maleic anhydride, citraconic anhydride, and 4-vinylbenzoic acid.

Specific examples of the phosphoric acid group-containing monomer include 2-methacryloyloxyethyl acid phosphate, 2-acryloyloxyethyl acid phosphate, acid phosphoxypropyl methacrylate, 3-chloro-2-acid phosphoxypropyl methacrylate, and a 2-methacryloyloxyethyl acid phosphate monoethanolamine half salt.
Specific examples of the phosphonic acid group-containing monomer include vinyl phosphonate.
Specific examples of the sulfonic acid group-containing monomer include acrylamide-tert.-butyl sulfonate, 2-acrylamide-2-methylpropane sulfonate, 2-sulfoethyl acrylate, 2-sulfoethyl methacrylate, 2-sulfopropyl acrylate, 4-sulfophenyl acrylate, 2-hydroxy-3-sulfopropyl acrylate, 2-acrylamidepropane sulfonate, 4-methacrylamide benzene sulfonate, p-styrene sulfonate, and vinyl sulfonate.
Specific examples of the sulfinic acid group-containing monomer include p-vinylbenzene sulfinate.

Examples of the hydrophobic group in the hydrophobic group-containing fluorine-free monomer (C) include a hydrocarbon group and a silicon-containing group. Examples of the hydrocarbon group include an aliphatic hydrocarbon group (for example, an alkyl group and an alkenyl group), a cycloaliphatic hydrocarbon group and an aromatic hydrocarbon group. The carbon number of the hydrocarbon group may be 1 to 30, for example, 4 to 30. Examples of silicon-containing group include a polysiloxane group.
The fluorine-free monomer (C) may be a (meth)acrylate ester having an alkyl group. The number of carbon atoms of the alkyl group may be from 1 to 30. For example, the fluorine-free monomer (C) may be acrylates of the general formula:

CH₂ =CA¹ COOA²

wherein A¹ is a hydrogen atom or a methyl group, and A² is an alkyl group represented by CₙH₂ₙ₊₁ (n = 1 to 30).
The fluorine-free monomer (C) may be also a (meth)acrylate ester having a polysiloxane group.

In view of a waterproof property (water repellency), preferable are a (meth)acrylate ester having an alkyl group having 4 to 30 carbon atoms and a (meth)acrylate ester having a polysiloxane group of the following formula: 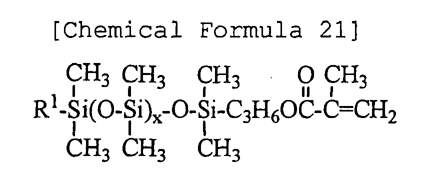 wherein R¹ is a hydrogen atom or an organic group, x is the number such that the number-average molecular weight of this compound is from 300 to 20000, particularly 1000.

The fluorine-containing polymer may contain an other monomer (D) in addition to the monomers (A), (B) and (C). Examples of the other monomer (D) include, for example, ethylene, vinyl acetate, vinyl halide (for example, vinyl chloride) vinylidene halide (for example, vinylidene chloride), acrylonitrile, styrene, benzyl (meth)acrylate, 2-hydroxyethyl (meth)acrylate, 2-hydroxypropyl (meth)acrylate, glycerol (meth)acrylate, polyethyleneglycol (meth)acrylate, polypropyleneglycol (meth)acrylate, methoxypolyethyleneglycol (meth)acrylate, methoxypolypropyleneglycol (meth)acrylate, tetrahydrofurfuryl (meth)acrylate, 3-chloro-2-hydroxypropyl (meth)acrylate, vinyl alkyl ketone, vinyl alkyl ether, isoprene, chloroprene and butadiene. The other monomer (D) is not limited to these examples.
The weight-average molecular weight of the fluorine-containing polymer may be, for example, from 2,000 to 5,000,000, particularly from 3,000 to 5,000,000, especially from 10,000 to 1,000,000. The weight-average molecular weight of the fluorine-containing polymer can be measured by GPC (gel permeation chromatography) (in terms of polystyrene).

The amounts of the monomers may be as follows, based on 100 parts by weight the monomer (A):
5 to 100 parts by weight, for example, 10 to 90 parts by weight, particularly, 15 to 80 parts by weight, especially 15 to 60 parts by weight of the monomer (B),
1 to 100 parts by weight, for example, 1 to 90 parts by weight, particularly, 2 to 60 parts by weight, especially 3 to 40 parts by weight of the monomer (C), and
0 to 100 parts by weight, for example, 0 to 70 parts by weight, particularly, 0.1 to 50 parts by weight, especially 1 to 30 parts by weight of the monomer (D).
When X in the formula (I) is a hydrogen atom or a methyl group, it is preferable that:
the amount of the monomer (A) is from 35 to 90 % by weight, for example, from 40 to 80 % by weight,
the amount of the monomer (B) is from 5 to 50 % by weight, for example, 10 to 40 % by weight,
the amount of the monomer (C) is from 2 to 18 % by weight, for example, 3 to 16 % by weight,
based on 100 % by weight of the fluorine-containing polymer. When the amount of the monomer (C) is at least 2 % by weight, the water repellency is higher; and when the amount of the monomer (C) is at most 18 % by weight, the stability of the fluorine-containing polymer is higher. In this case, the fluorine-containing polymer preferably consists of the components (A) to (C), but the fluorine-containing polymer may contain the monomer (D) in the amount of 0 to 40 % by weight, for example, 0.1 to 20 % by weight.
The fluorine-containing polymer in the present invention can be prepared by any of conventional polymerization methods. Conditions for polymerization reaction can be arbitrarily selected. Such polymerization methods include a solution polymerization and an emulsion polymerization.

In a solution polymerization, there can be used a method of dissolving the monomer(s) into an organic solvent in the presence of a polymerization initiator, replacing the atmosphere by nitrogen, and stirring the mixture with heating at the temperature within the range from 50°C to 120°C for 1 hour to 10 hours. Examples of the polymerization initiator include azobisisobutyronitrile, azobisisovaleronitrile, benzoyl peroxide, di-tert-butyl peroxide, lauryl peroxide, cumene hydroperoxide, t-butyl peroxypivalate and diisopropyl peroxydicarbonate. The polymerization initiator may be used in the amount within the range from 0.01 to 5 parts by weight, based on 100 parts by weight of total of the monomers.

The organic solvent is inert to the monomer(s) and dissolves the monomer(s), and examples thereof include pentane, hexane, heptane, octane, cyclohexane, benzene, toluene, xylene, petroleum ether, tetrahydrofuran, 1,4-dioxane, acetone, methyl ethyl ketone, methyl isobutyl ketone, ethyl acetate, butyl acetate, isopropyl alcohol, 1,1,2,2-tetrachloroethane, 1,1,1-trichloroethane, trichloroethylene, perchloroethylene, tetrachlorodifluoroethane and trichlorotrifluoroethane. The organic solvent may be used in the amount within the range from 50 to 1,000 parts by weight, based on 100 parts by weight of total of the monomers.

In an emulsion polymerization, there can be used a method of emulsifying monomers in water in the presence of a polymerization initiator and an emulsifying agent, replacing the atmosphere by nitrogen, and polymerizing with stirring, for example, at the temperature within the range from 50°C to 80°C for 1 hour to 10 hours. As the polymerization initiator, for example, water-soluble initiators (e.g., azobisisobutylamidine dihydrochloride, sodium peroxide, potassium persulfate and ammonium persulfate) and oil-soluble initiators (e.g., azobisisobutyronitrile, azobisisovaleronitrile, benzoyl peroxide, di-tert-butyl peroxide, lauryl peroxide, cumene hydroperoxide, t-butyl peroxypivalate and diisopropyl peroxydicarbonate) are used. The polymerization initiator may be used in the amount within the range from 0.01 to 5 parts by weight based on 100 parts by weight of the monomers.

In order to obtain a polymer dispersion in water, which is superior in storage stability, it is desirable that the monomers are atomized in water by using an emulsifying device capable of applying a strong shattering energy (e.g., a high-pressure homogenizer and an ultrasonic homogenizer) and then polymerized with using the oil-soluble polymerization initiator. Various emulsifying agents such as an anionic emulsifying agent, a cationic emulsifying agent and a nonionic emulsifying agent can be used as the emulsifying agent. Examples of the emulsifying agent include a hydrocarbon emulsifying agent, a fluorine-containing emulsifying agent and a silicone emulsifying agent. The amount of the emulsifying agent may be within the range from 0.5 to 50 parts by weight, for example, from 0.5 to 10 parts by weight, based on 100 parts by weight of the monomers. When the monomers are not completely compatibilized, a compatibilizing agent (e.g., a water-soluble organic solvent and a low-molecular weight monomer) capable of sufficiently compatibilizing them is preferably added to these monomers. By the addition of the compatibilizing agent, the emulsifiability and polymerizability can be improved.

Examples of the water-soluble organic solvent include acetone, methyl ethyl ketone, ethyl acetate, propylene glycol, dipropylene glycol monomethyl ether, dipropylene glycol, tripropylene glycol, ethanol and N-methyl-2-pyrrolidone. The water-soluble organic solvent may be used in the amount within the range from 1 to 50 parts by weight, e.g., from 10 to 40 parts by weight, based on 100 parts by weight of water.

In the present invention, the treatment agent comprises (1) the fluorine-containing polymer and (2) a liquid medium, for example, water and/or an organic solvent. The treatment agent generally contains a neutralizing agent. The treatment agent may be in the form of a solution of the fluorine-containing polymer (a solution in water or an oragnic solvent), or a dispersion of the fluorine-containing polymer (in water or an organic solvent). Since the fluorine-containing polymer of the present invention contains the acid group, a salt can be formed together with a base (that is, a neutralizing agent). The fluorine-containing polymer, which has formed the salt, can dissolve in water to form an aqueous solution of the fluorine-containing polymer. After the polymerization, particularly the solution polymerization (especially the solution polymerization in the organic solvent), the neutralizing agent and water, generally an aqueous solution of the neutralizing agent, may be added to form the treatment agent. After the polymerization, the organic solvent may be removed before or after the addition of the neutralizing agent and water.

Examples of the base added to the fluorine-containing polymer include ammonia, an amine (for example, triethylamine, diethylamine, triethanolamine, diethanol amine), and a basic metal salt (for example, sodium hydroxide, potassium hydroxide, sodium carbonate, sodium hydrogencarbonate and sodium acetate). The amount of the added base may be from 0.1 to 3 equivalents, for example, 0.5 to 1.5 equivalents, based on 1 equivalent of the acid group in the fluorine-containing polymer.
In the treatment agent, the amount of fluorine-containing polymer is not particularly limited and may be selected from the range which can homogeneously dissolve or disperse the fluorine-containing polymer. For example, the amount of the fluorine-containing polymer may be from 0.1 to 80 % by weight, for example, 0.2 to 20 % by weight, based on the treatment agent.

The treatment liquid of the present invention may contain (3) a silicon-containing compound, in addition to the fluorine-containing polymer (1) and the liquid medium (2).
The silicon-containing compound (3) is preferably a compound having at least one siloxane linkage.

The silicon-containing compound (3) may be a compound represented by the following general formula (I): 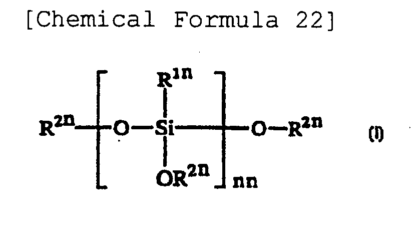 wherein R¹ⁿ is an alkyl group containing 1 to 18 carbon atoms and, when nn is at least 2 or more, the R¹ⁿ groups may be the same or different; R²ⁿ is a hydrogen atom or an alkyl group containing 1 to 5 carbon atoms and, when nn is 2 or more, the R²ⁿ groups may be the same or different; and nn is an integer of 1 to 20.

The alkyl group containing 1 to 18 carbon atoms as represented by R¹ⁿ is not particularly restricted but includes, among others, a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group; a hexadecyl group, a heptadecyl group and an octadecyl group. These may be straight-chained or branched.

The alkyl group containing 1 to 5 carbon atoms as represented by R²ⁿ is not particularly restricted but includes, among others, methyl, ethyl, propyl, butyl and pentyl. These may be straight-chained or branched.
The symbol nn represents an integer of 1 to 20, for example an integer of 1 to 10.

As said silicon-containing compound (3), there may more specifically be mentioned, among others, methyltrimethoxysilane, ethyltrimethoxysilane, propyltrimethoxysilane, butyltrimethoxysilane, pentyltrimethoxysilane, hexyltrimethoxysilane, heptyltrimethoxysilane, octyltrimethoxysilane, nonyltrimethoxysilane, decyltrimethoxysilane, undecyltrimethoxysilane, dodecyltrimethoxysilane, tridecyltrimethoxysilane, tetradecyltrimethoxysilane, pentadecyltrimethoxysilane, hexadecyltrimethoxysilane, heptadecyltrimethoxysilane, octadecyltrimethoxysilane, methyltriethoxysilane, ethyltriethoxysilane, propyltriethoxysilane, butyltriethoxysilane, pentyltriethoxysilane, hexyltriethoxysilane, heptyltriethoxysilane, octyltriethoxysilane, nonyltriethoxysilane, decyltriethoxysilane, undecyltriethoxysilane, dodecyltriethoxysilane, tridecyltriethoxysilane, tetradecyltriethoxysilane, pentadecyltriethoxysilane, hexadecyltriethoxysilane, heptadecyltriethoxysilane, octadecyltriethoxysilane and so forth. Among them, methyltrimethoxysilane, methyltriethoxysilane, hexyltriethoxysilane and octyltriethoxysilane are preferred.

The above-mentioned silicon-containing compounds may be used also in their dimer form as the silicon-containing compound (3) in the present invention. As such, there may be mentioned those of general formula (I) in which nn is 2 or 3, for instance. Furthermore, those in which nn is up to 20 may be used as well.

The silicon-containing compound (3) is preferably used in an emulsified form. Such emulsification can be conducted in the conventional manner, for example by using an emulsifying agent. Said emulsifying agent is not particularly restricted but may be a nonionic emulsifier, an anionic emulsifier, or the like.

Said nonionic emulsifier is not particularly restricted but includes, among others, common nonionic emulsifiers such as glycerol monostearate, glycerol monooleate, sorbitan monolaurate, sorbitan monopalmitate, sorbitan monostearate, sorbitan monooleate, sorbitan trioleate, sorbitan sesquioleate, polyoxyethylenesorbitan monolaurate, polyoxyethylenesorbitan monopalmitate, polyoxyethylenesorbitan monostearate, polyoxyethylenesorbitan monooleate, polyoxyethylenesorbitan trioleate, polyoxyethylenesorbitan sesquioleate, polyoxyethylenesorbitol tetraoleate, polyoxyethylene lauryl ether, polyoxyethylene cetyl ether, polyoxyethylene stearyl ether, polyoxyethylene oleyl ether, polyoxyethylene higher alcohol ethers, polyoxyethylene octylphenyl ether, polyoxyethylene nonylphenyl ether, polyoxyethylene nonylphenyl ether and the like.

As further examples of the nonionic emulsifier, there may be mentioned fluorinated emulsifiers, silicone type emulsifiers and the like. The fluorinated emulsifiers may comprises a fluorinated resin, or a combination of fluorinated resin with another resin. Examples of the other resin include an acrylic resin, an acryl-silicone resin, an epoxy resin, a urethane resin and an ester resin. As said silicone type emulsifiers, there may be mentioned polyalkylene oxide-modified polydimethylsiloxane compounds represented by the following general formulas:

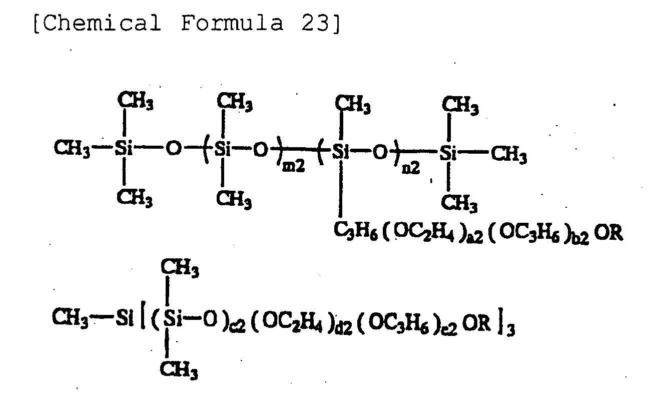

In the above formulas, R represents a hydrogen atom or an alkyl group, and m2, n2, a2, b2, c2, d2 and e2 each represents an integer indicative of the number of repetitions(for example, 0 to 200, particularly 1 to 100).

The above-mentioned anionic emulsifier is not particularly restricted but includes, among others, sodium lauryl sulfate, ammonium lauryl sulfate, sodium dodecylbenzenesulfonate, sodium alkylnaphthalene sulfonates, sodium dialkyl sulfosuccinates, sodium alkyldiphenyl ether disulfonates, alkyl phosphate diethanolamine salts, alkyl phosphate potassium salts, sodium polyoxyethylene lauryl ether sulfate, polyoxyethylene alkyl ether sulfuric acid triethanolamines, sodium polyoxyethylene alkylphenyl ether sulfates, sodium alkane sulfonates, mixed fatty acid soda soaps, semihardened beef tallow fatty acid soda soaps, semihardened beef tallow fatty acid potash soaps, stearic acid potash soap, oleic acid potash soap, castor oil potash soap, sodium higher alcohol sulfates, sodium salts of betanaphthalenesulfonic acid-formalin condensates, special aromatic sulfonic acid-formalin condensates, special carboxylic acid type surfactants, special polycarboxylic acid type surfactants, special polycarboxylic acid type polymer surfactants and the like.

The proportion of the anionic emulsifier in the sum of emulsifiers is not particularly restricted but is preferably from 0 to 20% by weight, for example, from 0.01 to 200% by weight. The nonionic emulsifiers mentioned above and the anionic emulsifiers mentioned above may respectively be used either singly or in combination, or one or more of the nonionic emulsifiers and one or more of the anionic emulsifiers may be used in combination. It is preferable, however, to use any of the nonionic emulsifiers and any of the anionic emulsifiers in combination. As the nonionic emulsifiers, polyalkylene oxide-modified polydimethylsiloxanes and fluorinated alkyl group-containing polyalkylene oxides are preferred.

The method of emulsifying the silicon-containing compound (3) of the present invention using the above-mentioned emulsifier(s) is not restricted. Emulsification can be conducted, for example, by stirring a mixture of the silicon-containing compound (3) and the emulsifier(s) at a high speed using a homomixer or the like and adding water dropwise thereto gradually. When, after such stirring, a fully homogeneous state is obtained, then a stable emulsion-like aqueous dispersion can be obtained by the addition of water. When water is added gradually, the concentration and viscosity may be higher or an insoluble matter may appear or a transparent solution may be formed at an initial point in some instances. In such cases, a uniform aqueous dispersion can be obtained as the amount of water is gradually increased.
The amount of the silicon-containing compound (3) may be from 0 to 200 parts by weight, for example, from 0 to 50 parts by weight, e.g., from 0.1 to 50 parts by weight, based on 100 parts by weight of the fluorine-containing polymer (1).

In the present invention, the treatment agent is coated on the substrate so that the water- and oil-repellency and soil-antifouling property are imparted to the substrate.

The substrate is masonry such as stone. Examples of the masonry include stone, brick, concrete and tile. Examples of stone include natural stone (for example, marble and granite), and artificial stone.

The masonry is treated by applying the treatment agent to the substrate. The treatment agent may be coated in the amount of 20 to 1000 g/m², preferably 50 to 500 g/m². The coating may be conducted once or a plurality of times. The coating method may be any of brushing, spraying, rolling, dipping, using rags containing the treatment agent, or the like. Excess treatment agent may be wiped off according to the necessity. Then the treatment agent is dried to remove the liquid medium. The drying may be conducted at room temperature, and/or the baking may be conducted at 80 °C to 250 °C.
The "treatment" means that a treatment agent is applied to a substrate by immersion, spraying, coating or the like. The treatment gives the result that a fluorine-containing polymer which is an active component of the treatment agent is adhered to surfaces of the substrate and/or penetrated into the internal parts of the substrate.

### EXAMPLES

The following Examples and Comparative Examples are shown to specifically illustrate the present invention.

### Example 1

Into a 200 cc four-necked flask equipped with a stirrer, an inert gas inlet, a condenser and a thermometer, 12.0 g of CF₃CF₂(CF₂CF₂)₃CH₂CH₂OCOCCH=CH₂, 1.0 g of stearyl acrylate, 7.0 g of acrylic acid and 30.0 g of tetrahydrofuran were charged and heated to 60°C. 0.2 g of azobisvaleronitrile was added and the polymerization reaction was conducted with stirring at 60°C for at least 12 hours. A gas chromatography revealed that a polymerization reaction conversion was at least 97%. An aqueous solution containing 1.7 g of ammonia was added to the resultant polymer solution. Tetrahydrofuran was distilled off under reduced pressure. The mixture was diluted with water to give a treatment liquid having a solid content of 3 %.
A surface of each of polished natural granite (mined in China, and purchased from Nittai Kogyo Kabushiki-Kaisha) and limestone (purchased from Inax Corp.) was coated with the treatment liquid (1 mL of the treatment liquid was applied to an area of 5 cm x 10 cm). After left at room temperature for 10 minutes, a superfluous treatment liquid was wiped off. After left at room temperature for 24 hours, the following soil resistance test was conducted.

### Soil resistance test

A soil was put on a treated substrate, and droplets were left for 24 hours and wiped off with a paper towel. The visual evaluation was conducted according to the following criteria.
- 0 :: Deep stain, and oil droplet widely spread
- 1 :: Deep stain, and oil droplet moderately spread
- 2 :: Deep stain, and slight or no oil droplet spread
- 3 :: Moderate stain, and no spread
- 4 :: Slight stain
- 5 :: No stain.
The results are shown in Table 1 (granite) and Table 2 (limestone).

### Example 2

Into the same apparatus as in Example 1, 12.0 g of CF₃CF₂(CF₂CF₂)₃CH₂CH₂OCOCCH=CH₂, 4.0 g of stearyl acrylate, 4.0 g of acrylic acid and 30.0 g of isopropyl alcohol were charged and heated to 60°C. 0.2 g of azobisvaleronitrile was added and the polymerization reaction was conducted with stirring at 60°C for at least 12 hours. A gas chromatography revealed that a polymerization reaction conversion was at least 97%.
An aqueous solution containing 1.0 g of ammonia was added to the resultant polymer solution. Isopropyl alcohol was distilled off under reduced pressure. The mixture was diluted with water to give a treatment liquid having a solid content of 3 %. The treatment and the soil resistance test were conducted in the same manner as in Example 1. The evaluation results are shown in Table 1 and Table 2.

### Example 3

Into the same apparatus as in Example 1, 10.0 g of CF₃CF₂(CF₂CF₂)₃CH₂CH₂OCOCCH=CH₂, 2.0 g of CF₃CF₂(CF₂CF₂)₄CH₂CH₂-OCOCCH=CH₂, 3.0 g of stearyl acrylate, 5.0 g of acrylic acid and 30.0 g of acetone were charged and heated to 60°C. 0.2 g of azobisvaleronitrile was added and the polymerization reaction was conducted with stirring at 60°C for at least 12 hours. A gas chromatography revealed that a polymerization reaction conversion was at least 97%.
An aqueous solution containing 1.2 g of ammonia was added to the resultant polymer solution. Acetone was distilled off under reduced pressure. The mixture was diluted with water to give a treatment liquid having a solid content of 3 %. The treatment and the soil resistance test were conducted in the same manner as in Example 1. The evaluation results are shown in Table 1 and Table 2.

### Example 4

Into the same apparatus as in Example 1, 12.0 g of CF₃CF₂(CF₂CF₂)₃CH₂CH₂OCOCCH=CH₂, 2.0 g of CF₃CF₂(CF₂CF₂)₄CH₂CH₂-OCOCCH=CH₂, 1.0 g of lauryl acrylate, 5.0 g of acrylic acid and 30.0 g of acetone were charged and heated to 60°C. 0.2 g of azobisvaleronitrile was added and the polymerization reaction was conducted with stirring at 60°C for at least 12 hours. A gas chromatography revealed that a polymerization reaction conversion was at least 97%.
An aqueous solution containing 1.2 g of ammonia was added to the resultant polymer solution. Acetone was distilled off under reduced pressure. The mixture was diluted with water to give a treatment liquid having a solid content of 3 %. The treatment and the soil resistance test were conducted in the same manner as in Example 1. The evaluation results are shown in Table 1 and Table 2.

### Example 5

The polymerization was conducted, the treatment liquid was prepared and the soil resistance test was conducted in the same procedure as in Example 3 except that acrylic acid was replaced by 2-methacryloyloxyethyl acid phosphate. The evaluation results are shown in Table 1 and Table 2.

### Example 6

Into the same apparatus as in Example 1, 14.0 g of CF₃CF₂CF₂CF₂CH₂CH₂OCOCCl=CH₂, 1.0 g of stearyl acrylate, 5.0 g of acrylic acid and 30.0 g of tetrahydrofuran were charged and heated to 60°C. 0.2 g of azobisvaleronitrile was added and the polymerization reaction was conducted with stirring at 60°C for at least 12 hours. A gas chromatography revealed that a polymerization reaction conversion was at least 97%.
An aqueous solution containing 1.2 g of ammonia was added to the resultant polymer solution. Tetrahydrofuran was distilled off under reduced pressure. The mixture was diluted with water to give a treatment liquid having a solid content of 3 %. The treatment and the soil resistance test were conducted in the same manner as in Example 1. The evaluation results are shown in Table 1 and Table 2.

### Example 7

Into the same apparatus as in Example 1, 12.0 g of CF₃CF₂(CF₂CF₂)₃CH₂CH₂OCOCCH=CH₂, 2.0 g of stearyl acrylate, 1.0 g of styrene, 5.0 g of citraconic anhydride and 30.0 g of tetrahydrofuran were charged and heated to 60°C. 0.2 g of azobisvaleronitrile was added and the polymerization reaction was conducted with stirring at 60°C for at least 12 hours. An aqueous solution containing 1.5 g of ammonia was added to the resultant polymer solution. Tetrahydrofuran was distilled off under reduced pressure. The mixture was diluted with water to give a treatment liquid having a solid content of 3 %. The treatment and the soil resistance test were conducted in the same manner as in Example 1. The evaluation results are shown in Table 1 and Table 2.

### Example 8

Into the same apparatus as in Example 1, 14.0 g of CF₃CF₂CF₂CF₂CH₂CH₂OCOCF=CH₂, 1.5 g of stearyl acrylate, 0.5 g of a polysiloxane group-containing methacrylate ester: 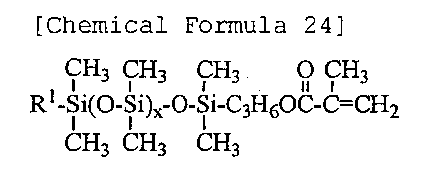 wherein R¹ is a hydrogen atom or an organic group, x is the number such that the number-average molecular weight of this compound is 1000 (SILAPLANE FM0711 manufactured by Chisso Corp.), 4.0 g of acrylic acid and 30.0 g of tetrahydrofuran were charged and heated to 60°C. 0.2 g of azobisvaleronitrile was added and the polymerization reaction was conducted with stirring at 60°C for at least 12 hours. A gas chromatography revealed that a polymerization reaction conversion was at least 97%.
An aqueous solution containing 1.2 g of ammonia was added to the resultant polymer solution. Tetrahydrofuran was distilled off under reduced pressure. The mixture was diluted with water to give a treatment liquid having a solid content of 3 %. The treatment and the soil resistance test were conducted in the same manner as in Example 1. The evaluation results are shown in Table 1 and Table 2.

### Example 9

7 Grams of the treatment liquid prepared in Example 2 having solid content of 3% and 3 g of an aqueous emulsion of hexyltriethoxysilane having a solid content 3% which is prepared by using polyoxyethylene lauryl ether as an emulsifying agent were mixed to give a mixture treatment liquid. The treatment and the soil resistance test were conducted in the same manner as in Example 1. The evaluation results are shown in Table 1 and Table 2.

### Example 10

9 Grams of the treatment liquid prepared in Example 3 having solid content of 3% and 1 g of an aqueous emulsion of octyltriethoxysilane having a solid content 3% which is prepared by using polyoxyethylene tridecyl ether as an emulsifying agent were mixed to give a mixture treatment liquid. The treatment and the soil resistance test were conducted in the same manner as in Example 1. The evaluation results are shown in Table 1 and Table 2.

### Example 11

Isopropyl alcohol was added to the polymer solution prepared in Example 2 for dilution to give a treatment liquid having a solid content 3%. The treatment and the soil resistance test were conducted in the same manner as in Example 1. The evaluation results are shown in Table 1 and Table 2.

### Comparative Example 1

The soil resistance test was conducted in the same manner as in Example 1, except that the treatment liquid was not coated on granite and limestone.

### Comparative Example 2

The polymerization was conducted in the same procedure as in Example 2 except that acrylic acid was replaced by methoxypolyethyleneglycol methacrylate. Water was added to the resultant polymer solution and isopropyl alcohol was distilled off under reduced pressure. The mixture was diluted with water to give a treatment liquid having a solid content of 3 %. The treatment and the soil resistance test were conducted in the same manner as in Example 1. The evaluation results are shown in Table 1 and Table 2.

### Comparative Example 3

Into the same apparatus as in Example 1, 14.0 g of CF₃CF₂(CF₂CF₂)₃CH₂CH₂OCOCCH=CH₂, 8.0 g of acrylic acid and 30.0 g of tetrahydrofuran were charged and heated to 60°C. 0.2 g of azobisvaleronitrile was added and the polymerization reaction was conducted with stirring at 60°C for at least 12 hours. A gas chromatography revealed that a polymerization reaction conversion was at least 97%.
An aqueous solution containing 1.9 g of ammonia was added to the resultant polymer solution. Tetrahydrofuran was distilled off under reduced pressure. The mixture was diluted with water to give a treatment liquid having a solid content of 3 %. The treatment and the soil resistance test were conducted in the same manner as in Example 1. The evaluation results are shown in Table 1 and Table 2.

### Comparative Example 4

The polymerization was conducted, the treatment liquid was prepared and the soil resistance test was conducted in the same procedure as in Example 3 except that stearyl acrylate was replaced by methoxypolyethyleneglycol methacrylate. The evaluation results are shown in Table 1 and Table 2.

### Comparative Example 5

Into the same apparatus as in Example 1, 12.0 g of CF₃CF₂ (CF₂CF₂) ₃CH₂CH₂OCOCCH=CH₂, 8.0 g of stearyl acrylate and 30.0 g of tetrahydrofuran were charged and heated to 60°C. 0.2 g of azobisvaleronitrile was added and the polymerization reaction was conducted with stirring at 60°C for at least 12 hours. A gas chromatography revealed that a polymerization reaction conversion was at least 97%.
The addition of water to the resultant polymer solution gave a precipitation so that a homogeneous treatment liquid could not be obtained.

**[Table 1]**

| Table 1 Soil resistant test (granite) | | | | |
|---|---|---|---|---|
| | Olive Oil | Waste Oil | Red Wine | Coffee |
| Ex. 1 | 5 | 5 | 5 | 5 |
| Ex. 2 | 5 | 4 | 4 | 5 |
| Ex. 3 | 5 | 5 | 4 | 5 |
| Ex. 4 | 5 | 5 | 5 | 5 |
| Ex. 5 | 5 | 4 | 4 | 5 |
| Ex. 6 | 5 | 4 | 5 | 5 |
| Ex. 7 | 5 | 4 | 4 | 5 |
| Ex. 8 | 5 | 5 | 4 | 5 |
| Ex. 9 | 5 | 4 | 5 | 5 |
| Ex. 10 | 5 | 5 | 5 | 5 |
| Ex. 11 | 5 | 5 | 5 | 5 |
| Com. Ex. 1 | 1 | 1 | 1 | 1 |
| Com. Ex. 2 | 4 | 3 | 2 | 2 |
| Com. Ex. 3 | 3 | 2 | 2 | 3 |
| Com. Ex. 4 | 3 | 2 | 2 | 2 |
| Com. Ex. 5 | Could not be measured, since homogeneous treatment liquid could not be obtained. | | | |

**[Table 2]**

| Table 2 Soil resistant test (limestone) | | | | |
|---|---|---|---|---|
| | Olive Oil | Waste Oil | Red Wine | Coffee |
| Ex. 1 | 5 | 4 | 4 | 5 |
| Ex. 2 | 5 | 5 | 5 | 5 |
| Ex. 3 | 5 | 5 | 5 | 5 |
| Ex. 4 | 5 | 5 | 4 | 5 |
| Ex. 5 | 5 | 5 | 5 | 5 |
| Ex. 6 | 5 | 4 | 4 | 5 |
| Ex. 7 | 5 | 5 | 4 | 5 |
| Ex. 8 | 5 | 5 | 5 | 5 |
| Ex. 9 | 5 | 5 | 5 | 5 |
| Ex. 10 | 5 | 5 | 5 | 5 |
| Ex. 11 | 5 | 5 | 5 | 5 |
| Com. Ex. 1 | 1 | 1 | 1 | 1 |
| Com. Ex. 2 | 4 | 3 | 2 | 2 |
| Com. Ex. 3 | 3 | 2 | 2 | 3 |
| Com. Ex. 4 | 3 | 2 | 2 | 2 |
| Com. Ex. 5 | Could not be measured, since homogeneous treatment liquid could not be obtained. | | | |

## Claims

1. A fluorine-containing polymer for a masonry treatment, comprising:
(A) a fluorine-containing monomer,
(B) a monomer containing at least one acid group selected from the group consisting of a carboxylic acid group, a phosphoric acid group, a phosphonic acid group, a phosphinic acid group, a sulfuric acid group, a sulfonic acid group and a sulfinic acid group, and
(C) a fluorine-free monomer containing a hydrophobic group.

2. The fluorine-containing polymer according to claim 1,
wherein the fluorine-containing monomer (A) is a monomer having:
at least one fluorine-containing group selected from the group consisting of a fluoroalkyl group, a fluoroalkenyl group and a fluoroether group, and
an unsaturated group of the formula: -O-CO-CX=CH₂
wherein X is a hydrogen atom, a methyl group, a fluorine atom, a chlorine atom, a bromine atom, an iodine atom, a CFX¹X² group (in which X¹ and X² are each a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group.

3. The fluorine-containing polymer according to claim 2,
wherein X is a fluorine atom, a chlorine atom, a bromine atom, an iodine atom, a CFX¹X² group (in which X¹ and X² are each a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group.

4. The fluorine-containing polymer according to claim 1,
wherein the hydrophobic group in the monomer (C) is a hydrocarbon group and/or a silicon-containing group.

5. The fluorine-containing polymer according to claim 4,
wherein the monomer (C) is a fluorine-free alkyl group-containing monomer and/or a polysiloxane group-containing monomer.

6. The fluorine-containing polymer according to anyone of claims 1 to 5, wherein the acid group in the fluorine-containing group is in the form of a salt by adding a base as a neutralizing agent.

7. The fluorine-containing polymer according to claim 1, which comprises:
(A) a fluorine-containing monomer having a fluorine-containing group, of the formula: 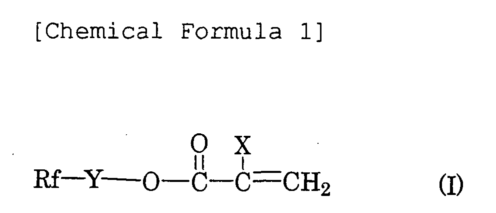 wherein X is a fluorine atom, a chlorine atom, a bromine atom, an iodine atom, a CFX¹X² group (in which X¹ and X² are each a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group;
Y is a direct bond, an aliphatic group having 1 to 10 carbon atoms which optionally has an oxygen atom, an aromatic, cycloaliphatic or araliphatic group having 6 to 10 carbon atoms which optionally has an oxygen atom, a -CH₂CH₂N(R¹)SO₂- group (in which R¹ is an alkyl group having 1 to 4 carbon atoms) or a -CH₂CH(OY¹)CH₂- group (in which Y¹ is a hydrogen atom or an acetyl group); and
Rf is a linear or branched fluoroalkyl or fluoroalkenyl group having 1 to 21 carbon atoms, or a fluoroether group having totally 1 to 200 repeating units selected from the group consisting of the repeating units: -C₃F₆O-, -C₂F₄O- and -CF₂O-,
(B) a monomer containing at least one acid group selected from the group consisting of a carboxylic acid group, a phosphoric acid group, a phosphonic acid group, a phosphinic acid group, a sulfuric acid group, a sulfonic acid group and a sulfinic acid group, and
(C) a fluorine-free monomer containing a hydrophobic group.

8. The fluorine-containing polymer according to claim 1, which comprises:
(A) 35 to 90 % by weight of a fluorine-containing monomer having a fluorine-containing group, of the formula: 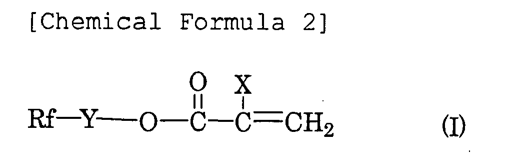 wherein X is a hydrogen atom or a methyl group;
Y is a direct bond, an aliphatic group having 1 to 10 carbon atoms which optionally has an oxygen atom, an aromatic, cycloaliphatic or araliphatic group having 6 to 10 carbon atoms which optionally has an oxygen atom, a -CH₂CH₂N(R¹)SO₂- group (in which R¹ is an alkyl group having 1 to 4 carbon atoms) or a -CH₂CH(OY¹)CH₂- group (in which Y¹ is a hydrogen atom or an acetyl group); and
Rf is a linear or branched fluoroalkyl or fluoroalkenyl group having 1 to 21 carbon atoms, or a fluoroether group having totally 1 to 200 repeating units selected from the group consisting of the repeating units: -C₃F₆O-, -C₂F₄O- and -CF₂O-,
(B) 5 to 50 % by weight of a monomer containing at least one acid group selected from the group consisting of a carboxylic acid group, a phosphoric acid group, a phosphonic acid group, a phosphinic acid group, a sulfuric acid group, a sulfonic acid group and a sulfinic acid group, and
(C) 2 to 18 % by weight of a fluorine-free monomer containing a hydrophobic group, the % by weight is based on 100% by weight of the fluorine-containing polymer.

9. The fluorine-containing polymer according to claim 7 or 8, wherein the carbon number of the Rf group is from 1 to 6.

10. The fluorine-containing polymer according to claim 9,
wherein the carbon number of the Rf group is from 1 to 4.

11. A treatment agent for masonry comprising:
(1) the fluorine-containing polymer according to claim 1, and
(2) a liquid medium.

12. The treatment agent according to claim 11, wherein the liquid medium is water and/or an organic solvent.

13. The treatment agent according to claim 11, which further contains (3) a silicon-containing compound.

14. A method of producing a masonry treatment agent which comprises preparing the fluorine-containing polymer according to claim 1 by a solution polymerization, then adding a neutralizing agent and water to form a salt.

15. A method of producing a masonry treatment agent which comprises preparing the fluorine-containing polymer according to claim 1 by a solution polymerization, then removing the organic solvent before or after the addition of a neutralizing agent and water to form a salt.

16. A method of treating masonry, comprising treating masonry with the treatment agent according to claim 11.

17. The method according to claim 16, which comprises applying the treatment agent to masonry and then removing the liquid medium.

18. A masonry produced by the method according to claim 16.
